# EUROPÄISCHE PATENTSCHRIFT

(11) **EP 1 283 139 B1**
(45) Veröffentlichungstag und Bekanntmachung des Hinweises auf die Patenterteilung: **23.11.2005**
(21) Anmeldenummer: 02015871.3
(22) Anmeldetag: 16.07.2002
(51) Int. Cl.: B60T 8/88

(54) **Energieversorgungseinrichtung für bordnetzgestützte, sicherheitsrelevante Systemkomponenten von Fahrzeugen**
Power supply device for motor vehicle safety relevant systems attached to on board network
Dispositif d'alimentation en énergie pour systèmes impliqués dans la sécurité d'un véhicule automobile et attachés au réseau de bord

(30) Priorität: 06.08.2001 DE 10138516
(43) Veröffentlichungstag der Anmeldung: 12.02.2003
(73) Patentinhaber: SIEMENS AKTIENGESELLSCHAFT, 80333 München (DE)
(72) Erfinder: Brandmeier, Thomas, Dr., 93173 Wenzenbach (DE); Doericht, Michael, 93138 Lappersdorf (DE); Hackl, Stefan, 92421 Schwandorf (DE); Kucera, Markus, Dr., 93059 Regensburg (DE); Schifferl, Ludwig, 93080 Pentling (DE)

(56) Entgegenhaltungen:
- DE-A- 19 855 245
- US-A- 6 088 638
- US-B1- 6 203 116

## Beschreibung

Die Erfindung betrifft eine Energieversorgungseinrichtung für bordnetzgestützte, sicherheitsrelevante Systemkomponenten von Fahrzeugen, insbesondere für Bremskomponenten elektromechanischer Bremssysteme in Kraftfahrzeugen.

Aus der US 6 088 638 A ist eine Energieversorgungseinrichtung für bordnetzgestützte Bremskomponenten elektromechanischer Bremssysteme in Kraftfahrzeugen bekannt. Eine Hauptbatterie ist dabei mit allen Systemkomponenten verbunden. Zwei Nebenbatterien sind derart mit jeweils einer Systemkomponente verbunden, dass die Energieversorgung der Systemkomponente durch die Nebenbatterie dann übernommen wird, wenn durch die Hauptbatterie keine ausreichende Spannung zur Verfügung gestellt ist. Versorgungsknoten sind mit der Hauptbatterie einerseits und genau einer Nebenbatterie andererseits sowie mit der zugeordneten Systemkomponente verbunden.

Die US 6 203 116 B1 zeigt eine weitere Energieversorgungseinrichtung insbesondere für Bremskomponenten elektromechanischer Bremssysteme in Kraftfahrzeugen. Diese Energieversorgungseinrichtung weist ein Bordnetz und zwei Energiespeicher auf.

Die DE 198 55 245 A1 weist eine weitere Energieversorgungseinrichtung für bordnetzgestützte Komponenten eines Kraftfahrzeuges auf. Ein Generator lädt hierbei zwei Batterien, die beide mit einem Verbraucher in Verbindung stehen.

Je nach Funktion und Einbauart unterliegen sicherheitsrelevanten Systemkomponenten von Fahrzeugen unterschiedlichen Ausfallkriterien. Komponenten von elektromechanischen Bremssystemen sind beispielsweise besonders sicherheitskritische Bauteile und werden daher in ihren sicherheitstechnischen Anforderungen sehr hoch eingestuft. Einige davon sind der Klasse der sogenannten "Fail-Operational-Systeme" zuzuordnen, die auch beim Auftreten einer definierten Anzahl von Fehlern noch korrekt funktionieren müssen.

Bei vielen sicherheitsrelevanten Systemkomponenten von Fahrzeugen und gerade bei Sicherheitsbetrachtungen im Zusammenhang mit einem elektromechanischen Bremssystem spielt dessen Energieversorgung eine zentrale Rolle. Ein Ausfall der Energieversorgung würde zu einem vollständigen Ausfall des Bremssystems führen, was natürlich nicht akzeptabel ist. Daher sind geeignete Maßnahmen vorzusehen, die Energieversorgung von sicherheitsrelevanten Systemkomponenten entsprechend ausfallsicher zu machen.

Es ist daher die Aufgabe der vorliegenden Erfindung, eine Energieversorgungseinrichtung der eingangs genannten Art derart weiterzubilden, dass sie auch nach Auftreten bestimmter Kombinationen von Fehlern nicht komplett ausfällt.

Diese Aufgabe wird erfindungsgemäß gelöst durch eine Energieversorgungseinrichtung mit den Merkmalen nach Anspruch 1.

Eine solche Energieversorgungseinrichtung toleriert den Ausfall einer Energieeinspeisung, wobei alle Systemkomponenten betreibbar bleiben. Fallen zwei Energieeinspeisungen aus, wird immer noch zumindest ein Teil der Systemkomponenten mit Energie versorgt, so dass ein Totalausfall verhindert ist. Die erfindungsgemäße Energieversorgungseinrichtung weist mindestens zwei Versorgungsknoten auf, die speiseseitig schaltbar mit der Hauptenergieeinspeisung und genau einer Nebenenergieeinspeisung verbunden sind, wobei jede Systemkomponente schaltbar mit genau einem Versorgungsknoten verbunden ist. Eine derartige Energieversorgungseinrichtung lässt sich mit relativ wenigen Schaltern realisieren, wobei dennoch eine hohe Fehlertoleranz erhalten bleibt. Dadurch, dass die Versorgungsknoten sowohl speise- als auch komponentenseitig schaltbar sind, lassen sich die entsprechenden Bauelemente der Energieversorgungseinrichtung im Fehlerfall vom Versorgungsknoten abkoppeln, so dass ein Fehler sich über den Versorgungsknoten nicht noch auf weitere Bauelemente auswirkt.

Jedem Versorgungsknoten können genau zwei Systemkomponenten zugeordnet sein. Eine derartige paarweise Zuordnung stellt einen guten Kompromiss hinsichtlich der Anzahl der benötigten Energieeinspeisungen mit zugehörigen Schaltelementen einerseits und der hierdurch erzielten Fehlertoleranz andererseits dar.

Die Versorgungsknoten und die ihnen zugeordneten speiseseitigen und komponentenseitigen Schalter können in gegeneinander abgedichteten Systemabschnitten untergebracht sein. Hierdurch wird verhindert, dass sich ein Fehler, der zum Ausfall eines Systemabschnitts führt, auf den anderen Systemabschnitt fortpflanzen kann. Ein Beispiel für einen derartigen Fehler ist das Eindringen einer leitenden Flüssigkeit in die Energieversorgungseinrichtung.

Die Systemabschnitte können als Hohlräume in einem Körper aus elektrisch isolierendem Material ausgebildet sein. In diesem Fall ist mit einem einfachen Aufbau eine sichere Abdichtung der Systemabschnitte gegeneinander gewährleistet.

Ein Massepotential der Energieversorgungseinrichtung kann vom Innern der Systemabschnitte getrennt geführt sein. Dies schließt Fehler des Typs "Kurzschluss in einem Systemabschnitt" sicher aus.

Die Masseleitungen können mit dem Körper aus elektrisch isolierendem Material vergossen sein. Dies stellt eine besonders einfache Art der Trennung der Masseleitungen von den Energieversorgungsleitungen der Energieversorgungseinrichtung dar.

Die elektrischen Versorgungsleitungen können zumindest abschnittsweise eine isolierende Beschichtung aufweisen. Hierdurch wird die Gefahr eines Kurzschlusses verringert. Alternativ oder zusätzlich können, eine entsprechende Ausführung der Energieversorgungseinrichtung mit einem Körper aus elektrisch isolierendem Material vorausgesetzt, die elektrischen Versorgungsleitungen zumindest abschnittsweise mit dem Körper vergossen sein.

Schließlich können über Abgriffe an der Energieversorgungseinrichtung weitere elektronische Komponenten des Bremssystems und der Energieversorgungseinrichtung selbst mit Energie versorgt werden. Dabei erfolgt ein Anschluss der Abgriffe an Positionen außerhalb der Versorgungsknoten in einer solchen Weise, dass die Abgriffe über die Schalter der Energieversorgungseinrichtung im Fehlerfalle abschaltbar sind.

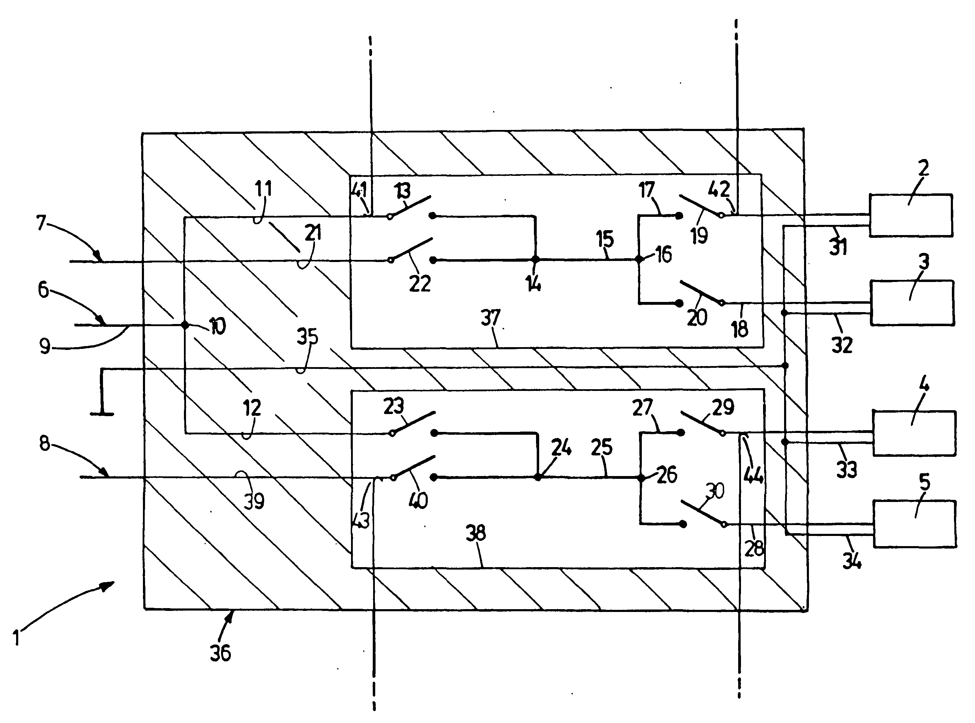

Ein Ausführungsbeispiel der Erfindung wird nachfolgend anhand der Zeichnungen erläutert. Die einzige Figur zeigt eine erfindungsgemäße Energieversorgungseinrichtung.

Die in der Zeichnung insgesamt mit dem Bezugszeichen 1 bezeichnete Energieversorgungseinrichtung versorgt vier Bremskomponenten 2, 3, 4, 5 eines nicht näher dargestellten elektromechanischen Bremssystems in einem Kraftfahrzeug. Bei den Bremskomponenten kann es sich beispielsweise um die Stellmotoren für die Betätigung der Bremsbacken handeln.

Zur Energieversorgung der Bremskomponenten 2, 3, 4, 5 dienen eine Hauptenergieeinspeisung 6 und zwei Nebenenergieeinspeisungen 7, 8. Die Nebenenergieeinspeisungen 7, 8 sind voneinander und zur Hauptenergieeinspeisung 6 unabhängig, so dass eine geforderte Zweitfehlerfestigkeit der Energieversorgungseinrichtung 1 gewährleistet ist. Eine mögliche Auslegung der Energieeinspeisungen 6, 7, 8 ist zum Beispiel diejenige, die Hauptenergieeinspeisung 6 als Bordnetz-Einspeisung vorzusehen und die Nebenenergieeinspeisungen 7, 8 als zwei unabhängige Sicherheitsbatterie-Einspeisungen auszuführen.

Von einer in der Zeichnung nicht dargestellten Hauptenergiequelle kommend, teilt sich eine Hauptzufuhrleitung 9 an einem Verteilerknoten 10 auf in eine erste Hauptspeiseleitung 11 und in eine zweite Hauptspeiseleitung 12. Über einen ersten Hauptspeiseschalter 13 ist die erste Hauptspeiseleitung 11 mit einem ersten Versorgungsknoten 14 verbunden, dem komponentenseitig die Bremskomponenten 2 und 3 zugeordnet sind. Eine vom ersten Versorgungsknoten 14 ausgehende erste Komponentenversorgungsleitung 15 teilt sich in einem ersten Komponentenverteilerknoten 16 auf in eine erste Komponentenspeiseleitung 17 und in eine zweite Komponentenspeiseleitung 18. ber einen ersten Komponentenschalter 19, der zwischen dem ersten Komponentenverteilerknoten 16 und der Bremskomponente 2 angeordnet ist, speist die erste Komponentenspeiseleitung 17 die Bremskomponente 2. Über einen zweiten Komponentenschalter 20, der zwischen dem ersten Komponentenverteilerknoten 16 und der Bremskomponente 3 angeordnet ist, speist die zweite Komponentenspeiseleitung 18 die Bremskomponente 3.

Von einer in der Zeichnung nicht dargestellten ersten Nebenenergiequelle, die der Nebenenergieeinspeisung 7 zugeordnet ist, kommend, ist eine erste Nebenspeiseleitung 21 über einen ersten Nebenspeiseschalter 22 mit dem ersten Versorgungsknoten 14 verbunden.

Die zweite Hauptspeiseleitung 12 ist über einen zweiten Hauptspeiseschalter 23 mit einem Versorgungsknoten 24 verbunden, über den die Bremskomponenten 4, 5 mit Energie versorgt werden. Hierzu verbindet eine zweite Komponentenversorgungsleitung 25 den zweiten Versorgungsknoten 24 mit einem zweiten Komponentenverteilerknoten 26. Dort teilt sich die zweite Komponentenversorgungsleitung 25 auf in eine dritte Komponentenspeiseleitung 27 und eine vierte Komponentenspeiseleitung 28. Über einen dritten Komponentenschalter 29 ist die dritte Komponentenspeiseleitung 27 mit der Bremskomponente 4 verbunden. Über einen vierten Komponentenschalter 30 ist die vierte Komponentenspeiseleitung 28 mit der Bremskomponente 5 verbunden.

Die Bremskomponenten 2, 3, 4, 5 weisen jeweils eine Masseleitung 31, 32, 33, 34, die mit einer Hauptmasseleitung 35 verbunden sind. Letzteres ist im konkreten Ausführungsbeispiel lediglich schematisiert eingezeichnet. In der Praxis werden Maßnahmen zur redundanten Auslegung der Leitung vorgesehen.

Zwischen der Hauptenergiequelle und den beiden Nebenenergiequellen und den Bremskomponenten 2, 3, 4, 5 sind die Bauelemente der Energieversorgungseinrichtung 1 in einem Isolierkörper 36 aus Kunststoff untergebracht, der zwei Hohlräume 37, 38 aufweist. Im ersten Hohlraum 37 sind der erste Hauptspeiseschalter 13, der erste Versorgungsknoten 14, die erste Komponentenversorgungsleitung 15, der erste Komponentenverteilerknoten 16 sowie die erste und zweite Komponentenspeiseleitung 17, 18 mit zugeordneten Komponentenschaltern 19, 20 untergebracht.

Analog zur ersten Nebenenergieeinspeisung 7 ist bei der zweiten Nebenenergieeinspeisung 8 eine zweite Nebenspeiseleitung 39 über einen zweiten Nebenspeiseschalter 40 mit dem zweiten Versorgungsknoten 24 verbunden.

Im zweiten Hohlraum 38 sind der zweite Hauptspeiseschalter 23, der zweite Nebenspeiseschalter 40, der zweite Versorgungsknoten 24, die zweite Komponentenversorgungsleitung 25, der zweite Komponentenverteilerknoten 26 sowie die dritte und vierte Komponentenspeiseleitung 27, 28 mit zugeordneten Komponentenschaltern 29, 30 untergebracht.

Die beiden Hohlräume 37, 38 sind gegeneinander und nach außen hin für sich flüssigkeitsdicht.

Die Leitungen bzw. Leitungsabschnitte der Energieversorgungseinrichtung 1, die im Isolierkörper 36 verlaufen und nicht in Hohlräumen 37, 38 angeordnet sind, sind mit dem Material des Isolierkörpers 36 vergossen. Zumindest außerhalb des Isolierkörpers 36 und innerhalb der Hohlräume 37, 38 weisen die elektrischen Leitungen der Energieversorgungseinrichtung 1 eine isolierende Beschichtung auf.

Bei einer alternativen Ausführungsform der Energieversorgungseinrichtung, die nicht in der Zeichnung dargestellt ist, sind sämtliche Schalter der Energieversorgungseinrichtung 1 als Power-MOSFET-Schalter ausgeführt. In dem Fall müssten zusätzlich zu den Schaltern 13, 23 Maßnahmen zur Sicherung der Hauptenergie bei einem einfachen Kurzschluss an einem Versorgungsknoten vorgenommen werden, da ansonsten die Freilaufdioden der Power-MOSFET-Schalter eine Fortpflanzung des Kurzschlusses zur Hauptenergieversorgung verursachen würden.

Wie aus der beigefügten Zeichnung schließlich als weiterer Aspekt der Erfindung hervorgeht, können über die Haupt- und Nebenenergieeinspeisungen 6, 7, 8 auch weitere Nebenaggregate, wie Versorgungseinheiten für elektrische Baugruppen des Bremssystems, über entsprechende Abgriffe 41, 42, 43, 44 gespeist werden. Dabei ist die Einbindung der Abgriffe so gewählt, dass diese nicht direkt an, sondern außerhalb der Versorgungsknoten 10, 14, 16 an solchen Positionen an das elektrische Netz der Energieversorgungseinrichtung 1 angeschlossen werden, die durch Schalter abtrennbar sind. Es sind dies beispielsweise die Abgriffe 41, 42 durch die Schalter 13 bzw. 19 oder die Abgriffe 43, 44 durch die Schalter 40 bzw. 29. Damit wirkt ein Bauteilfehler, der zu einem Kurzschluss zwischen Versorgungsspannung und Masse führt, wie ein Kurzschluss einer Energiezuführung der Energieversorgungseinrichtung 1 oder eines Bremsaktuators mit Masse. Damit führt auch ein Zweifachfehler nicht zum Ausfall des gesamten Systems.

Bei der erfindungsgemäßen Energieversorgungseinrichtung 1 können beliebige Zweierkombinationen von Fehlern aus der folgenden Auflistung auftreten, ohne dass die Energieversorgung beeinträchtigt wird, das heißt, dass die Fehler unter sicherheitstechnischen Aspekten tolerabel sind. In dieser Auflistung sind der Fehlertyp und anschließend die zu seiner Tolerierung vorgesehene Maßnahme angegeben:
- Eine der Speiseleitungen 11, 12, 21, 39 wird fehlerhaft aufgetrennt:
   Da jede der Bremskomponenten 2, 3, 4, 5 von jeweils zwei Energieeinspeisungen versorgt werden kann, können bei Auftreten eines solchen Fehlers weiterhin alle Bremskomponenten 2, 3, 4, 5 betrieben werden. Sogar, wenn die Hauptenergieeinspeisung 6 und eine der Nebenenergieeinspeisungen 7, 8 durch ein derartiges Auftrennen ausfallen, lassen sich noch zwei Bremskomponenten über die verbleibende Nebenenergieeinspeisung betreiben.
- Speiseseitiger Kurzschluss in einer der Energieeinspeisungen 6, 7, 8 in einer Leitung gegen Masse:
   Die betroffene Energieeinspeisung kann durch Öffnen des zugeordneten Speiseschalters 13, 22, 23, 40 komplett entkoppelt werden. Bei Ausfall einer Energieeinspeisung bleiben alle Bremskomponenten 2, 3, 4, 5 betreibbar.
- Auftrennung der Energiezuführung eines Bremsaktuators 2, 3, 4, 5 in der zugeordneten Komponentenspeiseleitung 17, 18, 27, 28:
   In diesem Fall bleiben drei von vier Bremskomponenten betriebsfähig.
- Kurzschluss in einer der Komponentenspeiseleitungen 17, 18, 27, 28:
   Auch hier bleiben drei der vier Bremskomponenten betriebsfähig.
- Ein Schalter bleibt fehlerhaft in der Schaltstellung "auf":
   Solange es sich um einen der speiseseitigen Schalter 13, 22, 23, 40 handelt, bleiben alle Bremskomponenten betriebsfähig. Handelt es sich um einen der komponentenseitigen Schalter 19, 20, 29, 30, so bleiben drei von vier Bremskomponenten betriebsfähig.
- Ein Schalter bleibt fehlerhaft in Schalterstellung "zu":
   Da jede Bremskomponente über zwei Schalter mit den zugeordneten Energieeinspeisungen verbunden ist, lassen sich weiterhin alle vier Bremskomponenten betreiben.
- Ein Kurzschluss nach Masse im Bereich einer der Versorgungsknoten 14, 24:
   In diesem Falle lässt sich der betroffene Versorgungsabschnitt der Energieversorgungseinrichtung 1 durch Öffnen der entsprechenden Speiseschalter abtrennen und es bleiben die dem anderen Versorgungsknoten 14, 24 zugeordneten Bremskomponenten betriebsfähig.

## Patentansprüche

1. Energieversorgungseinrichtung für bordnetzgestützte, sicherheitsrelevante Systemkomponenten von Fahrzeugen, insbesondere für Bremskomponenten elektromechanischer Bremssysteme in Kraftfahrzeugen,
a) mit einer Hauptenergieeinspeisung (6), die schaltbar (13, 19, 20, 23, 29, 30) mit allen Systemkomponenten (2, 3, 4, 5) verbunden ist;
b) mit mindestens zwei Nebenenergieeinspeisungen (7, 8), die voneinander und zur Hauptenergieeinspeisung (6) unabhängig sind, wobei jede Systemkomponente (2, 3, 4, 5) mit genau einer Nebenenergieeinspeisung (7, 8) schaltbar (22, 19, 20, 40, 29, 30) verbunden ist;
c) mit mindestens zwei Versorgungsknoten (14, 24), die speiseseitig schaltbar (13, 22, 23, 40) mit der Hauptenergieeinspeisung (6) und genau einer Nebenenergieeinspeisung (7, 8) verbunden sind, wobei jede Systemkomponente (2, 3, 4, 5) schaltbar (19, 20, 29, 30) mit genau einem Versorgungsknoten (14, 24) verbunden ist.

2. Energieversorgungseinrichtung nach Anspruch 1, **dadurch gekennzeichnet, dass** jedem Versorgungsknoten (14, 24) genau zwei Systemkomponenten zugeordnet sind.

3. Energieversorgungseinrichtung nach Anspruch 1 oder 2, **dadurch gekennzeichnet, dass** die Versorgungsknoten (14, 24) und die ihnen zugeordneten speiseseitigen und komponentenseitigen Schalter (13, 22, 19, 20, 23, 40, 29, 30) in gegeneinander abgedichteten Systemabschnitten (37, 38) untergebracht sind.

4. Energieversorgungseinrichtung nach Anspruch 3, **dadurch gekennzeichnet, dass** die Systemabschnitte als Hohlräume (37, 38) in einem Körper (36) aus elektrisch isolierendem Material ausgebildet sind.

5. Energieversorgungseinrichtung nach Anspruch 3 oder 4, **dadurch gekennzeichnet, dass** ein Massepotential der Energieversorgungseinrichtung (1) vom Innern der Systemabschnitte (37, 38) getrennt geführt (31, 32, 33, 34, 35) ist.

6. Energieversorgungseinrichtung nach Anspruch 5, **dadurch gekennzeichnet, dass** die Masseleitungen (31, 32, 33, 34, 35) mit dem Körper (36) aus elektrisch isolierendem Material vergossen sind.

7. Energieversorgungseinrichtung nach einem der vorhergehenden Ansprüche, **dadurch gekennzeichnet, dass** Versorgungsleitungen (11, 12, 15, 17, 18, 25, 27, 28, 39) zumindest abschnittsweise eine isolierende Beschichtung aufweisen.

8. Energieversorgungseinrichtung nach einem der vorhergehenden Ansprüche, **gekennzeichnet durch** mindestens einen Abgriff (41, 42, 43, 44) an der Energieversorgungseinrichtung (1), der außerhalb der Versorgungsknoten (10, 14, 16) an solchen Positionen angeschlossen ist, dass er **durch** Schalter (13, 19, 40, 29) der Energieversorgungseinrichtung (1) abschaltbar sind.

## Claims

1. Power supply device for safety-relevant system components of vehicles, which components are supported by the vehicle electrical system's on-board network, in particular for brake components of electromechanical brake systems in motor vehicles,
a) having a main power feed (6) connected switchably (13, 19, 20, 23, 29, 30) to all other system components (2, 3, 4, 5);
b) having at least two ancillary power feeds (7, 8) which are independent of each other and of the main power feed (6), with each system component (2, 3, 4, 5) being connected switchably (22, 19, 20, 40, 29, 30) to precisely one ancillary power feed (7, 8);
c) having at least two supply nodes (14, 24) connected on the feed side switchably (13, 22, 23, 40) to the main power feed (6) and to precisely one ancillary power feed (7, 8), with each system component (2, 3, 4, 5) being connected switchably (19, 20, 29, 30) to precisely one supply node (14, 24).

2. Power supply device according to claim 1, **characterised in that** each supply node (14, 24) is assigned precisely two system components.

3. Power supply device according to claim 1 or 2, **characterised in that** the supply nodes (14, 24) and the switches (13, 22, 19, 20, 23, 40, 29, 30) on the feed side and component side that are assigned thereto are housed in system sections (37, 38) that are sealed from each other.

4. Power supply device according to claim 3, **characterised in that** the system sections are embodied as cavities (37, 38) in a body (36) made of electrically insulating material.

5. Power supply device according to claim 3 or 4, **characterised in that** a ground potential of the power supply device (1) is routed (31, 32, 33, 34, 35) separately from inside the system sections (37, 38).

6. Power supply device according to claim 5, **characterised in that** the ground leads (31, 32, 33, 34, 35) are encapsulated along with the body (36) made of electrically insulating material.

7. Power supply device according to one of the preceding claims, **characterised in that** supply leads (11, 12, 15, 17, 18, 25, 27, 28, 39) have an insulating coating at least along sections.

8. Power supply device according to one of the preceding claims, **characterised by** at least one tap (41, 42, 43, 44) on the power supply device (1), which tap is connected at locations outside the supply nodes (10, 14, 16) at which it can be deactivated by means of switches (13, 19, 40, 29) of the power supply device (1).

## Revendications

1. Dispositif d'alimentation en énergie pour des composants de systèmes de véhicules automobiles alimentés par le réseau de bord et importants pour la sécurité, en particulier pour des composants de freinage de systèmes de freinage électromécaniques dans des véhicules automobiles,
a) avec un approvisionnement principal en énergie (6) qui est relié de manière commutable (13, 19, 20, 23, 29, 30) avec tous les composants du système (2, 3, 4, 5) ;
b) avec au moins deux approvisionnements auxiliaires en énergie (7, 8) qui sont indépendants l'un par rapport à l'autre ainsi que par rapport à l'approvisionnement principal en énergie (6), chaque composant du système (2, 3, 4, 5) étant relié de manière commutable (22, 19, 20, 40, 29, 30) avec un approvisionnement auxiliaire en énergie précisément défini (7, 8) ;
c) avec au moins deux noeuds d'alimentation (14, 24) qui sont reliés du côté approvisionnement de manière commutable (13, 22, 23, 40) avec l'approvisionnement principal en énergie (6) et avec un approvisionnement auxiliaire en énergie précisément défini (7, 8), chaque composant du système (2, 3, 4, 5) étant relié de manière commutable (19, 20, 29, 30) avec un noeud d'alimentation précisément défini (14, 24).

2. Dispositif d'alimentation en énergie selon la revendication 1, **caractérisé en ce qu'**à chaque noeud d'alimentation (14, 24) sont attribués deux composants de système précisément définis.

3. Dispositif d'alimentation en énergie selon la revendication 1 ou 2, **caractérisé en ce que** les noeuds d'alimentation (14, 24) et les commutateurs (13, 22, 19, 20, 23, 40, 29, 30) situés du côté de l'approvisionnement et du côté des composants et qui leurs sont attribués sont logés dans des sections de systèmes rendues étanches entre elles (37, 38).

4. Dispositif d'alimentation en énergie selon la revendication 3, **caractérisé en ce que** les sections de systèmes sont configurées comme cavités creuses (37, 38) se trouvant dans un corps (36) en matériau électriquement isolant.

5. Dispositif d'alimentation en énergie selon la revendication 3 ou 4, **caractérisé en ce qu'**un potentiel de masse du dispositif d'alimentation en énergie (1) est guidé séparément (31, 32, 33, 34, 35) à partir de l'intérieur des sections de systèmes (37, 38).

6. Dispositif d'alimentation en énergie selon la revendication 5, **caractérisé en ce que** les lignes de masses (31, 32, 33, 34, 35) sont coulées dans le corps (36) en matériau électriquement isolant.

7. Dispositif d'alimentation en énergie selon l'une quelconque des revendications précédentes, **caractérisé en ce que** des lignes d'alimentation (11, 12, 15, 17, 18, 25, 27, 28, 39) comprennent au moins par sections un revêtement isolant.

8. Dispositif d'alimentation en énergie selon l'une quelconque des revendications précédentes, **caractérisé par** au moins un point de prélèvement (41, 42, 43, 44) sur le dispositif d'alimentation en énergie (1) qui est raccordé en dehors des noeuds d'alimentation (10, 14, 16) sur des positions telles qu'il puisse être déconnecté par l'intermédiaire de commutateurs (13, 19, 40, 29) du dispositif d'alimentation en énergie (1).
